Europäisches Patentamt

European Patent Office

Office européen des brevets

(19)

(11) Veröffentlichungsnummer: **0 202 618 B1**

(12) # EUROPÄISCHE PATENTSCHRIFT

(45) Veröffentlichungstag der Patentschrift: **08.12.93**

(51) Int. Cl.⁵: **H04B 10/00**, H04J 15/00

(21) Anmeldenummer: **86106663.7**

(22) Anmeldetag: **15.05.86**

(54) **Optoelektrischer Transimpedanzempfänger.**

(30) Priorität: **18.05.85 DE 3517925**

(43) Veröffentlichungstag der Anmeldung:
**26.11.86 Patentblatt 86/48**

(45) Bekanntmachung des Hinweises auf die
Patenterteilung:
**08.12.93 Patentblatt 93/49**

(84) Benannte Vertragsstaaten:
**AT CH DE FR GB IT LI NL**

(56) Entgegenhaltungen:
**US-A- 4 051 363**

**ELEKTOR, Band 9, Nr. 3, März 1983, Seiten
352-355, Canterbury, GB; "O,IC! using photodiodes"**

**JOURNAL OF PHYSICS E. SCIENTIFIC IN-
STRUMENTS, Band 16, Nr. 12, Dezember
1983, Seiten 1238-1241, Dorking, GB; F.J. MA-
HER et al.: "Design and performance of an
amplifier for EBIC imaging in a scanning
electron microscope"**

(73) Patentinhaber: **SIEMENS AKTIENGESELL-
SCHAFT
Wittelsbacherplatz 2
D-80333 München(DE)**

(72) Erfinder: **Hein, Bernhard, Dr.-Ing.
Röderstrasse 39
D-6109 Mühltal 2(DE)**

## Beschreibung

Die Erfindung betrifft einen wie im Oberbegriff des Patentanspruchs 1 angegebenen optoelektrischen Transimpedanzempfänger.

Aus der US-A-4051363 ist bereits ein optoelektrischer Transimpedanzempfänger bekannt, der zwei an eine Fotodiode angeschlossene Verstärker enthält. Der eine Verstärker verstärkt ein hochfrequentes Breitbandsignal, der andere einen Gleichstrom und einen niederfrequenten Teil des empfangenen Signals. Der für das hochfrequente Signal vorgesehene Verstärker ist an seinem Ausgang mit einem Kondensator versehen. Der Niederfrequenz-Verstärker ist über einen ohmschen Widerstand gegengekoppelt. Mit Hilfe eines Komparators werden die Ausgangssignale der beiden Verstärker zu einem einzigen Signal zusammengefaßt.

Bei dem bekannten optoelektrischen Empfänger bildet ein Netzwerk, bestehend aus zwei Widerständen und einem Kondensator die Last, die die Fotodiode abschließt.

Andererseits ist es bereits bekannt, den von einer Fotodiode gelieferten Strom einem Transimpedanzverstärker zuzuführen.

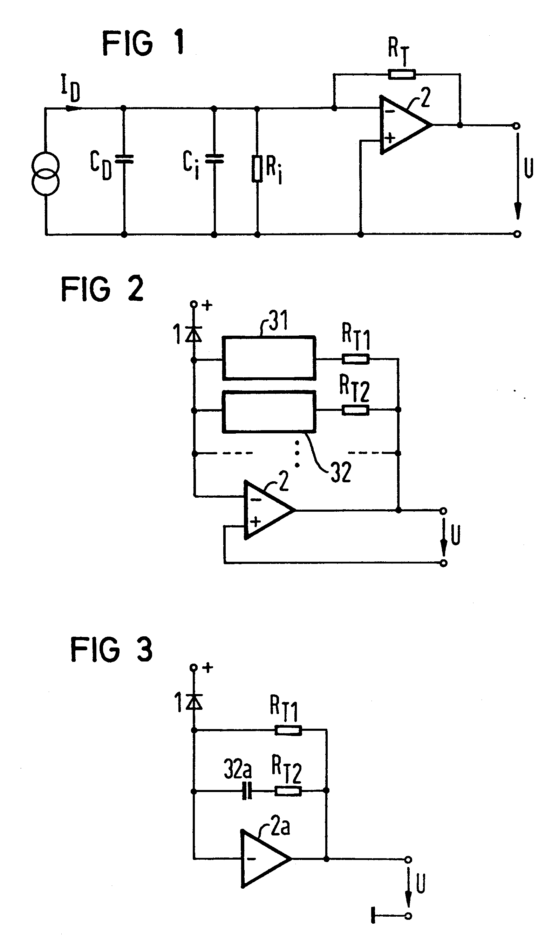

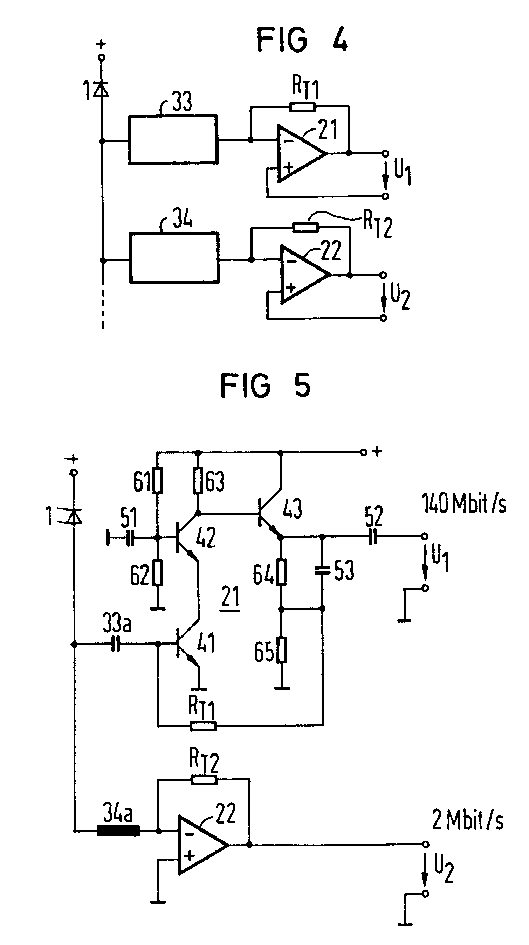

Ein in Fig. 1 dargestelltes Ersatzschaltbild eines solchen Empfängers ist z.B. der Fig. 4.26 auf Seite 127 des Buches von R.G.Smith, S.D. Personick: Receiver Design for Optical Fiber Communication Systems - Springer Verlag, New York, 1982 zu entnehmen. Die Fotodiode liefert einen Strom $I_D$, der in erster Näherung proportional zur empfangenen Lichtleistung P ist. Mit Hilfe des rückgekoppelten Verstärkers mit dem Transimpedanzwiderstand $R_T$ wird der Strom $I_D$ in die Ausgangsspannung U umgesetzt. Die Strom-Spannungs-Übertragungsfunktion $H(w) = U(w)/I_D(w)$ lautet nach dem Ersatzschaltbild mit $A \gg 1$ :

$$H(w) = \frac{U(w)}{I_D(w)} = -R_T \cdot \frac{1}{\left[1 + jw \ R_T(C_D+C_i)/A\right]} \qquad (1)$$

mit

- $C_D$: Kapaität der Fotodiode
- $C_i$: Eingangskapazität des Verstärkers
- $R_i$: Eingangswiderstand des Verstärkers
- $R_T$: Transimpedanzwiderstand
- $A$ : Verstärkungsfaktor des Verstärkers

In das Empfängerrauschen gehen im wesentlichen das Rauschen der ersten Transistorstufe und das Rauschen des Transimpedanzwiderstandes ein. Um das Rauschen des Widerstandes möglichst klein zu machen, d.h. um die Empfängerempfindlichkeit möglichst groß zu machen, muß der Transimpedanzwiderstand $R_T$ groß gewählt werden. Aus Gleichung (1) ist auch ersichtlich, daß dann die Ausgangsspannung U groß wird. Bei Vergrößerung des Transimpedanzwiderstandes $R_T$ verringert sich jedoch gleichzeitig die Bandbreite des Empfängers. Aus Gleichung (1) kann die 3-dB-Bandbreite mit der Kreisfrequenz $\omega_g$ abgelesen werden:

$$\omega_g = \frac{A}{R_T(C_D + C_1)} \qquad (2)$$

Durch Vorgabe der gewünschten Bandbreite des Empfängers ist somit der Transimpedanzwiderstand festgelegt. So kann man nach Ralf Th. Kersten: Einführung in die optische Nachrichtentechnik - Springer Verlag, 1983; Kapitel 8.3 Gesamtaufbau, Seiten 358 bis 361 auf diese Weise einen Transimpedanzverstärker an die erforderliche Bandbreite anpassen.

Werden über einen optischen Transimpedanzempfänger zwei oder mehr Basisbandsignale im elektrischen Frequenzmultiplexbetrieb empfangen, so richtet sich bei herkömmlichen Transimpedanzempfängern der Transimpedanzwiderstand nach dem höchstfrequenten Basisbandsignal. Für niederfrequentere Basisbandsignale ist dann der gleiche Transimpedanzwiderstand wirksam und der Empfänger hat somit die gleiche Empfindlichkeit für alle Signale.

Werden als Sendeelemente Laserdioden eingesetzt, so kann es wegen der Nichtlinearität der Laserkennlinie zu einem Übersprechen vom niederfrequenten Signal in das hochfrequente Basisbandsignal kommen, wenn die Laserdiode bis unter den Schwellenstrom moduliert wird. Um dann das Übersprechen klein zu halten, ist es wünschenswert, daß der Modulationsstrom für das niederfrequentere Basisbandsignal möglichst klein gehalten wird. Aus diesem Grunde ist eine Erhöhung der Empfängerempfindlichkeit für das niederfrequentere Basissignal empfehlenswert.

Eine Erhöhung der Empfängerempfindlichkeit für das Schmalbandsignal ist auch für dessen Notbetrieb sinnvoll, damit die Sendeleistung für den Schmalbandkanal bei abgeschaltetem Breitbandkanal klein gehalten werden kann.

Die Aufgabe der vorliegenden Erfindung besteht demzufolge darin, bei einer Ausbildung des optoelektrischen Empfängers als Transimpedanzempfänger die Empfindlichkeit für den schmalbandigen Basisbandbereich zu erhöhen.

Diese Aufgabe wird gemäß der Erfindung durch die im Patentanspruch 1 angegebenen Merkmale gelöst.

Bei der vorgestellten Erfindung wird die Empfindlichkeit des Empfängers für niederfrequentere Basisbandsignale erhöht. Dabei wird der Transimpedanzwiderstand im Prinzip frequenzabhängig gemacht, so daß für die verschiedenen Basisbandsignale verschiedene Widerstände wirksam werden, und zwar wird der Widerstand immer größer, je niedriger die obere Grenzfrequenz des entsprechenden Basisbandsignals ist. Gleichzeitig erhöhen sich dadurch die Empfängerempfindlichkeit und die Ausgangsspannung ungefähr proportional zur Erhöhung des Transimpedanzwiderstandes.

Der Vorteil der Erfindung liegt somit in einer Erhöhung der Empfängerempfindlichkeit und in einer größeren Spannungsverstärkung für die niederfrequenteren Basisbandsignale, wenn zwei oder mehr Basisbandsignale im Frequenzmultiplexbetrieb von einem optischen Empfänger empfangen werden. Die einzelnen Signale können dabei entweder mit nur einem optischen Träger (Modulation des optischen Sendeelementes mit den elektrischen Basisbandsignalen im Frequenzmultiplex) aber auch mit verschiedenen optischen Trägern übertragen werden (jeder optische Träger übermittelt dabei z.B. ein Basisbandsignal, wobei die optischen Träger auch unterschiedliche Wellenlängen haben können). Es muß nur sichergestellt sein, daß sich die Spektren der detektierten Signale nicht überlappen. Durch die höhere Verstärkung für die niederfrequenteren Basisbandsignale kann dann eventuell sogar eine Nachverstärkung entfallen.

Vorteilhafte Weiterbildungen sind den Patentansprüchen 2 und 3 zu entnehmen.

Beschreibung

Im folgenden wird die Erfindung anhand mehrerer Figuren erläutert.

Fig. 1     zeigt das bereits behandelte Ersatzschaltbild eines Transimpedanzempfängers nach dem Stand der Technik.

In den Fig. 2 bis 5 sind Ausführungsbeispiele der Erfindung dargestellt. Dabei zeigen für einen Transimpedanzempfänger mit frequenzabhängigem Transimpedanzwiderstand

Fig. 2     ein Prinzipschaltbild und

Fig. 3     ein Beispiel für zwei Signale.

Für getrennte Transimpedanzempfänger für die verschiedenen Signale ist in

Fig. 4     ein Prinzipschaltbild und in

Fig. 5     ein realisiertes Beispiel für ein 140-Mbit/s- und ein 2-Mbit/s-Signal dargestellt.

Bei dem Ersatzschaltbild des Transimpedanzempfängers nach Fig. 1 liegt zwischen dem Minus-Eingang und dem Plus-Eingang des Verstärkers mit dem Verstärkungsfaktor A eine Parallelschaltung aus dem Eingangswiderstand $R_i$ und der Eingangskapazität $C_i$ des Verstärkers sowie der Kapazität $C_D$ der Fotodiode, die als Stromquelle den Strom $I_D$ an die Parallelschaltung abgibt. Der Verstärker ist über den Transimpedanzwiderstand $R_T$, der zwischen dem Ausgang und dem Minus-Eingang des Verstärkers angeordnet ist, gegengekoppelt. Zwischen dem Ausgang und dem Plus-Eingang des Verstärkers liegt die Ausgangsspannung u.

a) Frequenzabhängiger Transimpedanzwiderstand

In Fig. 2 sind das Prinzipschaltbild und in Fig. 3 ein einfaches Ausführungsbeispiel angegeben. Bei dem Transimpedanzempfänger nach Fig. 2 liegt die Anode der Fotodiode 1 am Minus-Eingang des Verstärkers 2. Zwischen dem Ausgang und dem Minus-Eingang des Verstärkers 2 liegt eine Parallelschaltung mehrerer Serienschaltungen, von denen zwei dargestellt und weitere durch Punkte angedeutet sind. Die erste Serienschaltung besteht aus dem ersten Filter 31 und dem ersten Transimpedanzwiderstand $R_{T1}$, die zweite

3

Serienschaltung aus dem zweiten Filter 32 und dem zweiten Transimpedanzwiderstand $R_{T2}$. Zwischen dem Ausgang und dem Plus-Eingang des Verstärkers 2 liegt die Ausgangsspannung U.

Fig. 3 zeigt für den Transimpedanzempfänger nach Fig. 2 ein Beispiel für zwei Signale. Der Minus-Eingang des invertierenden Verstärkers 2a ist an die Anode der Fotodiode 1 angeschlossen. Zwischen dem Ausgang und dem Minus-Eingang des Verstärkers 2a liegt daher eine Parallelschaltung aus zwei Stromzweigen. In einem ersten Stromzweig liegt der erste Transimpedanzwiderstand $R_{T1}$, in einem zweiten Stromkreis der Kondensator 32a zusammen mit dem dazu in Serie angeordneten zweiten Transimpedanzwiderstand $R_{T2}$. Die Ausgangsspannung U liegt zwischen dem Ausgang des Verstärkers 2a und Massepotential.

Die Filter 31 und 32 sind dabei so auszulegen, daß für die einzelnen Basisbandsignale jeweils nur der entsprechende Transimpedanzwiderstand wirksam wird. Liegen die Spektren der Basisbandsignale weit genug auseinander (z.B. 140-Mbit/s- und 2-Mbit/s-Signal) so genügt anstelle zweier Filter ein Kondensator vor dem Verstärker für das höherfrequente Basisbandsignal, wie Fig. 3 zeigt. Bei diesem Empfängerprinzip sind die Basisbandsignale am Ausgang des optischen Empfängers noch nicht getrennt.

b) Aufbau mit getrennten Verstärkern

In Fig. 4 sind das Prinzipschaltbild und in Fig. 5 ein einfaches Ausführungsbeispiel angegeben.

Bei der Schaltungsanordnung nach Fig. 4 ist die Anode der Fotodiode 1 an die Eingänge mehrerer Filter geführt, von denen der besseren Übersichtlichkeit halber nur die Filter 33 und 34 dargestellt sind. Der Ausgang des Filters 33 ist an den Minus-Eingang des Verstärkers 21, der Ausgang des Filters 34 an den Minus-Eingang des Verstärkers 22 geführt. Bei dem Verstärker 21 liegt zwischen Ausgang und Minus-Eingang der erste Transimpedanzwiderstand $R_{T1}$. Bei dem Verstärker 22 ist zwischen dem Ausgang und dem Minus-Eingang der zweite Transimpedanzwiderstand $R_{T2}$ angeordnet. Die Ausgangsspannung $U_1$ des Verstärkers 21 liegt zwischen Ausgang und Plus-Eingang des Verstärkers 21, die Ausgangsspannung $U_2$ des Verstärkers 22 zwischen Ausgang und Plus-Eingang des Verstärkers 22.

Die Filter 33 und 34 sind dabei so auszulegen, daß für die einzelnen Basisbandsignale jeweils nur der entsprechende Transimpedanzempfänger wirksam wird. Liegen die Spektren der Signale wie im ersten Beispiel weit genug auseinander, so können die Filter 33 und 34 sehr einfach aufgebaut werden. Bei diesem Empfängerprinzip arbeitet die Photodiode auf verschiedene Verstärker, die jeweils für das entsprechende Basisbandsignal optimiert werden können. Mit diesem Prinzip ist somit eine höhere Empfindlichkeit bzw. Verstärkung erreichbar als bei dem Transimpedanzempfänger mit den frequenzabhängigen Transimpedanzwiderständen. Gleichzeitig werden bei diesem Empfänger die einzelnen Basisbandsignale schon getrennt.

In Fig. 5 ist das Schaltbild eines realisierten, einfach aufbauten Empfängers für ein 140-Mbit/s- und ein 2-Mbit/s-Basisbandsignal angegeben.

Fig. 5 zeigt weitere Einzelheiten einer entsprechend Fig. 4 aufbauten Schaltungsanordnung. Das Filter 33 ist durch den Kondensator 33a, das Filter 34 durch die Drossel 34a gebildet.

Der Verstärker 21 enthält drei Transistoren 41 bis 43. Der Transistor 41 liegt mit seinem Emitter an Masse und mit seinem Kollektor am Emitter des Transistors 42. Der Transistor 42 ist kollektorseitig sowohl über den Widerstand 63 an den Pluspol der Versorgungsspannung als auch mit der Basis des Transistors 43 verbunden. Die Basis des Transistors 42 ist an einen über den Kondensator 51 an Masse geführten Abgriff des an Versorgungsspannung liegenden Spannungsteilers 61, 62 angeschlossen. Der Transistor 43 liegt mit seinem Kollektor unmittelbar am Pluspol der Versorgungsspannung. Der Emitter des Transistors 43 ist über eine Serienschaltung der Widerstände 64 und 65 an Masse geführt. Parallel zum Widerstand 64 liegt der Kondensator 53.

Der Minus-Eingang des Verstärkers 21 ist durch die Basis des Transistors 41 gebildet. Der Emitter des Transistors 43 ist über den Kondensator 52 an den unsymmetrischen bzw. einpolig an Masse liegenden 140-Mbit/s-Ausgang des Verstärkers 21 geführt, der die Spannung $U_1$ abgibt.

Der Transimpedanzwiderstand $R_{T1}$ liegt auf der einen Seite an der Basis des Transistors 41 und ist auf der anderen Seite am Verbindungspunkt der Widerstände 64 und 65. angeschlossen, so daß er über den Kondensator 53 mit dem Emitter des Transistors 43 verbunden ist.

Der Verstärker 22, der an die Drossel 34a angeschlossen ist, gibt an seinem 2-Mbit/s-Ausgang die Spannung $U_2$ ab.

Der Empfänger ist für beide Signale noch nicht optimiert. Für das Breitbandsignal wurde ein herkömmlicher Transimpedanzempfänger mit einem Transimpedanzwiderstand $R_{T1}$ von 5 kΩ aufgebaut, der über einen Kondensator 33a von 10 pF an die gemeinsame Fotodiode 1 angekoppelt ist. Der Empfänger für das Schmalbandsignal besteht aus einem schnellen Operationsverstärker vom Typ O P 3508 J als Verstärker 22

4

mit einem Transimpedanzwiderstand $R_{T2}$ von 100 kΩ; die Ankopplung erfolgt über eine Drossel 34a von 10 μ H. Die Transistoren 41...43 sind jeweils vom Typ BFR93. Als Fotodiode 1 findet eine PIN-Diode Verwendung.

Mit diesen Werten konnte die Empfängerempfindlichkeit für das Schmalbandsignal um mehr als 15 dB gesteigert werden. Bei einem für das Schmalbandsignal optimierten Empfänger ist sicher noch eine weitere wesentliche Empfindlichkeitserhöhung möglich.

**Patentansprüche**

1. Optoelektrischer Empfänger zum Empfang von im Frequenzmultiplex übertragenen optischen Signalen unterschiedlicher Basisbandbreite, bestehend aus einer Fotodiode (1) und einer an die Fotodiode angeschlossenen Verstärkeranordnung, wobei die Verstärkeranordnung einen für die Basisbandsignale gemeinsamen, über einen Transimpedanzwiderstand rückgekoppelten Verstärker (2) enthält,
   **dadurch gekennzeichnet**,
   daß der Transimpedanzwiderstand des Verstärkers (2) derart frequenzabhängig ausgebildet ist, daß sich für das schmalbandige Basisbandsignal ein höherer wirksamer Transimpedanzwiderstand als für das breitbandige Basisbandsignal ergibt, und
   daß der Transimpedanzwiderstand aus wenigstens zwei parallel zueinander angeordneten Stromzweigen mit je einem Widerstand ($R_{T1}$, $R_{T2}$) besteht und daß in wenigstens einem der Stromzweige in Serie zum Widerstand ($R_{T1}$, $R_{T2}$) ein Filter (31, 32) angeordnet ist (Fig. 2, 3).

2. Optoelektrischer Empfänger nach Anspruch 1,
   **dadurch gekennzeichnet**,
   daß die Verstärkeranordnung wenigstens zwei jeweils über ein Filter (33, 34) an die Fotodiode (1) angeschlossenen und jeweils über einen Transimpedanzwiderstand rückgekoppelte Verstärker (21, 22) enthält und daß die Transimpedanzwiderstände der Verstärker (21, 22) derart bemessen sind, daß sich für das schmalbandige Basisbandsignal ein höherer wirksamer Transimpedanzwiderstand als für das breitbandige Basissignal ergibt (Fig. 4, 5).

3. Optoelektrischer Empfänger nach Anspruch 2,
   **dadurch gekennzeichnet**,
   daß hinter der gemeinsamen Fotodiode (1) und vor dem Verstärker (21) für ein Basisbandsignal von 140 Mbit/s ein Kondensator (33a) von 10 pF und vor den Verstärker (22) für ein Basisbandsignal von 2 Mbit/s eine Drossel (34a) von 10 μH geschaltet ist (Fig. 5).

**Claims**

1. Electro-optical receiver for the reception of optical signals which are transmitted in frequency multiplex and which have differing baseband width, comprising a photodiode (1) and an amplifier arrangement connected to the photodiode, in which the amplifier arrangement includes an amplifier (2) which is in common for the baseband signals and which is fed back via a transimpedance resistance, characterized in that the transimpedance resistance of the amplifier (2) is designed to be frequency-dependent so that a higher effective transimpedance resistance arises for the narrow-band baseband signal than for the broad-band baseband signal, and in that the transimpedance resistance comprises at least two current branches, disposed in parallel with one another, with a respective resistance ($R_{T1}$, $R_{T2}$), and in that a filter (31, 32) is disposed in series with the resistance ($R_{T2}$, $R_{T2}$) in at least one of the current branches (Figs. 2, 3).

2. Electro-optical receiver according to Claim 1, characterized in that the amplifier arrangement includes at least two amplifiers (21, 22) which are connected in each instance via a filter (33, 34) to the photodiode (1) and which are fed back in each instance via a transimpedance resistance, and in that the transimpedance resistances of the amplifiers (21, 22) are dimensioned so that a higher effective transimpedance resistance arises for the narrow-band baseband signal than for the broad-band baseband signal (Figs. 4, 5).

3. Electro-optical receiver according to Claim 2, characterized in that a capacitor (33a) of 10 pF is connected behind the common photodiode (1) and ahead of the amplifier (21) for a baseband signal of 140 Mbit/s, and a choke (34a) of 10 μH is connected ahead of the amplifier (22) for a baseband signal of 2 Mbit/s (Fig. 5).

**Revendications**

1.  Récepteur optoélectrique servant à la réception de signaux optiques transmis en multiplexage en fréquence et de différentes bandes passantes de base, constitué d'une photodiode (1) et d'un dispositif amplificateur relié à la photodiode, le dispositif amplificateur comportant un amplificateur (2) commun aux signaux à bande de base et rebouclé par l'intermédiaire d'une résistance de transimpédance, caractérisé en ce que la résistance de transimpédance de l'amplificateur (2) est formée de telle façon pour dépendre de la fréquence qu'il en résulte, pour le signal à bande de base à bande étroite, une résistance de transimpédance active supérieure à celle pour le signal à bande de base à large bande, et que la résistance de transimpédance est constituée d'au moins deux voies de courant montées en parallèle et comportant respectivement une résistance ($R_{T1}$, $R_{T2}$) et que, dans au moins une des branches de courant, est monté en série avec la résistance ($R_{T1}$, $R_{T2}$) un filtre (31, 32) (figures 2, 3).

2.  Récepteur optoélectrique suivant la revendication 1, caractérisé en ce que le dispositif amplificateur comporte au moins deux amplificateurs (21, 22) reliés, respectivement par l'intermédiaire d'un filtre (33, 34), à la photodiode (1), et rebouclés, respectivement par l'intermédiaire d'une résistance de transimpédance, et que les résistances de transimpédance des amplificateurs (21, 22) sont telles qu'il en résulte, pour le signal à bande de base à bande étroite, une résistance de transimpédance active supérieure à celle pour le signal à bande de base à large bande (figures 4, 5).

3.  Récepteur optoélectrique suivant la revendication 2, caractérisé en ce que, en aval de la photodiode commune (1) et en amont de l'amplificateur (21), pour un signal à bande de base de 140 Mbit/s, est monté un condensateur (33a) de 10 pF et, en amont de l'amplificateur (22), pour un signal à bande de base de 2 Mbit/s, est montée une self (34a) de 10 $\mu$H (figure 5).

FIG 1

FIG 2

FIG 3

# FIG 4

# FIG 5